# EUROPEAN PATENT SPECIFICATION

(11) **EP 1 668 930 B1**
(45) Date of publication and mention of the grant of the patent: **05.08.2015**
(21) Application number: 04780645.0
(22) Date of filing: 09.08.2004
(51) Int. Cl.: H04W 4/14, H04W 4/16

(54) **METHOD AND APPARATUS FOR FORWARDING INFORMATION FROM A WIRELESS DEVICE**
VERFAHREN UND VORRICHTUNG ZUM WEITERLEITEN VON INFORMATIONEN VON EINER DRAHTLOSEN EINRICHTUNG
PROCÉDÉ ET DISPOSITIF POUR TRANSFÉRER DES INFORMATIONS À PARTIR D'UN DISPOSITIF SANS FIL

(30) Priority: 11.08.2003 CN 03153367
(43) Date of publication of application: 14.06.2006
(73) Proprietor: Motorola Mobility LLC, Libertyville, IL 60048 (US)
(72) Inventor: LU, Jin Quan, Beijing 100036 (CN); YANG, Yi-Bin, Beijing 100005 (CN); SUN, Ling-Ling, Beijing 100872 (CN); LAN, Kai, Beijing 100083 (CN)
(74) Representative: Boult Wade Tennant
(86) International application number: PCT/US2004/025841
(87) International publication number: WO 2005/020596

(56) References cited:
- EP-A2- 0 841 797
- WO-A1-98/52342
- WO-A1-02/058414
- US-A- 5 077 789
- US-A1- 2002 146 105
- US-A1- 2003 022 660
- US-A1- 2003 055 906
- US-A1- 2004 203 941
- US-B1- 6 285 750

## Description

### FIELD OF THE INVENTION

The present invention relates generally to wireless devices such as mobile phones, and in particular to a method and an associated apparatus for forwarding calls and messages from one device to another.

### BACKGROUND OF THE INVENTION

The Global System for Mobile Communications (GSM) network includes millions of mobile phone subscribers and offers world-wide coverage, high voice clarity and additional services. The additional services include short messaging service (SMS), enhanced messaging service (EMS), and multimedia messaging service (MMS). SMS users can send and receive short alphanumeric messages up to 160 characters in length. SMS was originally developed as a simple paging mechanism for notifying mobile phone users that a voicemail message was waiting for them. However SMS users quickly adopted SMS for use as a general messaging service and large volumes of SMS messages are now sent throughout the world every month.

EMS and MMS extend the capabilities of SMS messaging to include color pictures, sound and video. Like SMS, both EMS and MMS messages can also include plain text. The text message is then translated into a Transport Protocol Data Unit (TPDU). A TPDU is a hexadecimal string that generally includes some control information in a header followed by user data that includes simple text messages. The TPDU is then sent to a Service Centre Address (SCA) and routed to the destination device such as another mobile phone.

The delivery of messages in a TPDU is guaranteed because each message is automatically pushed to the recipient's device. There is no need for a user to log on to a network to receive messages. An acknowledgment is also automatically returned to the sending SCA confirming whether a message was received by the recipient's device. If the recipient's mobile phone or other device is turned off or outside its coverage area, the message will be held by the network and delivered as soon as the device is reconnected to the network.

The simplicity and reliability of SMS messaging has therefore resulted in numerous additional applications beyond use as a paging mechanism. For example, it has been proposed that external devices such as home thermostats be controlled through coded SMS messages. A user is able to send a control request embedded in an SMS message to a home computer that is wired to the thermostat. The computer interprets the control request and adjusts the home thermostat up or down.

There is a need however for additional applications of SMS, EMS, MMS and other related messaging services. In particular, the subject of the present invention addresses a need for improved control of call and message forwarding of a wireless device that is physically remote from a user. Although individual wireless devices may be programmed to forward calls and messages to another destination, there is not presently available a method for controlling such call forwarding when a user is not able to physically access the device. For example, if a user mistakenly leaves a first mobile phone at home, the user may be interested in reprogramming the first phone from a remote location using a second mobile phone so that the first phone will forward to the second phone all calls and messages received by the first phone.

PCT application publication no. WO 02/058414 describes a system and method for remotely controlling a mobile terminal. The mobile terminal receives a control command through a call link and performs an operation according to the received control command.

European patent application publication no. EP 0841797 describes a method of enabling subscribers of a cellular network to redirect all calls to a predefined destination address of a fixed telephone network to their mobile phone number.

### SUMMARY OF THE INVENTION

In accordance with the present invention there is provided a method of programming a wireless first device to forward information and a wireless device as recited in the accompanying claims.

The present invention therefore provides a method and an associated apparatus for programming a wireless first device such as a mobile phone to forward information such as calls and text messages to a receiving device. According to the method, an alphanumeric code is incorporated into the wireless first device. A user then creates a text message using a sending device such as another mobile phone or a personal computer. The alphanumeric code and the address of the receiving device are incorporated into the text message. The text message is then transmitted from the sending device to the wireless first device. The wireless first device recognizes the alphanumeric code and consequently reprograms itself to forward information such as calls and text messages to the address of the receiving device.

The associated apparatus includes a processor, a radio frequency communications unit coupled to be in communication with the processor, and a computer readable medium also coupled to be in communication with the processor. The processor is operative to receive through the communications unit an alphanumeric code and a text message that includes the address of a receiving device. The processor compares the received alphanumeric code with a recorded code saved on the computer readable medium. If the received code and the recorded code match, the processor forwards information through the communications unit to the address of the receiving device.

### BRIEF DESCRIPTION OF THE DRAWINGS

Other aspects of the present invention will become apparent from the following detailed description taken together with the drawings, wherein like reference characters designate like or corresponding elements or steps throughout the drawings, in which:
Fig. 1 is a schematic diagram illustrating a mobile telephone architecture;
Fig. 2 is a schematic diagram of a network that employs the method of the present invention;
Fig. 3 is a generalized flow diagram illustrating the method of the present invention; and
Fig. 4 is a schematic diagram of an exemplary format of a special text message used to reprogram a wireless device to forward information according to one embodiment of the present invention.

### DETAILED DESCRIPTION OF THE PREFERRED EMBODIMENT OF THE INVENTION

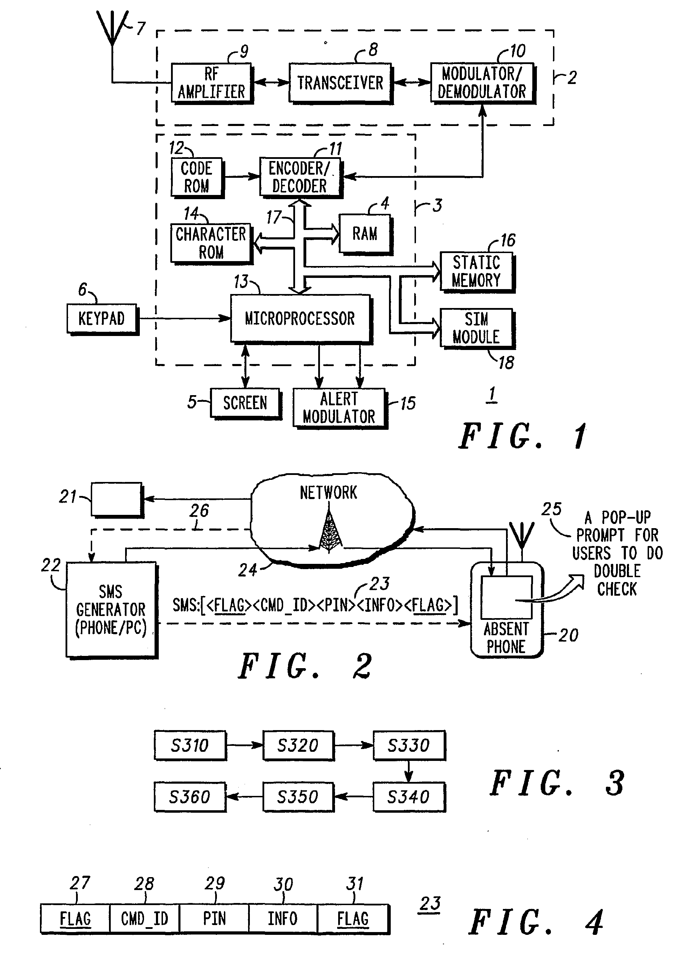

With reference to Fig. 1, there is illustrated a mobile telephone 1 architecture comprising a radio frequency communications unit 2 coupled to be in communication with a processor 3. An input interface in the form of a screen 5 and a keypad 6 are also coupled to be in communication with the processor 3.

The processor 3 includes an encoder/decoder 11 with an associated Read Only Memory (ROM) 12 storing data for encoding and decoding voice or other signals that may be transmitted or received by the mobile telephone 1. The processor 3 also includes a micro-processor 13 coupled, by a common data and address bus 17, to an encoder/decoder 11 and an associated character Read Only Memory (ROM) 14, a Random Access Memory (RAM) 4, static programmable memory 16 and a removable SIM module 18. The static programmable memory 16 and SIM module 18 each can store, amongst other things, selected incoming text messages and a telephone book database TDb. For the purposes of the present description and associated claims, the Read Only Memory (ROM) 14, Random Access Memory (RAM) 4, static programmable memory 16 and removable SIM module 18 are all considered to be computer readable mediums.

The micro-processor 13 has ports for coupling to the keypad 6, the screen 5 and an alert module 15 that typically contains a speaker, vibrator motor and associated drivers. The character Read Only Memory 14 stores code for decoding or encoding text messages that may be received by the communication unit 2, input at the keypad 6. In this embodiment the character Read Only Memory 14 also stores operating code (OC) for micro-processor 13 and code for performing a method according to the present invention as described below with reference to Figs. 2 - 4.

The radio frequency communications unit 2 is a combined receiver and transmitter having a common antenna 7. The communications unit 2 has a transceiver 8 coupled to antenna 7 via a radio frequency amplifier 9. The transceiver 8 is also coupled to a combined modulator/demodulator 10 that couples the communications unit 2 to the processor 3.

Referring to both the network schematic diagram of Fig. 2 and to the generalized flow diagram of Fig. 3, one embodiment of the present invention employs the above-described architecture of a mobile telephone 1 to program a wireless first device 20 to forward information to one or more receiving devices 21. An alphanumeric code is incorporated into the wireless first device 20 (as represented by step S310 in the flow diagram of Fig. 3). A special text message 23 is then created using a sending device 22 (Step S320). The alphanumeric code and an address of the receiving device 21 are incorporated into the special text message 23 (Step S330). The special text message 23 is then transmitted from the sending device 22 to the wireless first device 20 (Step S340). The wireless first device 20 recognizes the alphanumeric code incorporated into the special text message 23 and then reprograms itself to forward information to the address of the receiving device 21 (Step S350).

The general purpose of the special text message 23 is to control the call forwarding and/or the message forwarding of the wireless first device 20. The wireless first device 20 may therefore be one of a variety of wireless devices such as mobile phones, personal digital assistants (PDAs), laptop computers, and other similar devices. Similarly, the sending device 22 and the receiving device 21 may each be any type of device that is capable of sending and receiving, respectively, text messages. That includes the wireless devices described above but also any of various wired devices such as standard telephones and personal computers.

Various types of information may also be forwarded from the wireless first device 20 to the receiving device 21. Such information may include voice telephone calls, SMS messages, EMS messages, MMS messages, and other types of data.

The sending device 22 may transmit the special text message 23 to the wireless first device 20 either directly or through a network 24. After the wireless first device 20 receives and processes the special text message 23, the wireless first device 20 will forward calls and/or messages that it receives from the network 24 to the new destination address that is identified in the special text message 23. Multiple addresses may also be included in the special text message 23 such that information would be forwarded to multiple receiving devices 21. Of course, the sending device 22 and the receiving device 21 may also be one and the same device, as indicated by the dashed line 26 shown in Fig. 2.

Optionally, the wireless first device 20 may also perform additional functions such as displaying a pop-up message 25 on its screen display or creating another indicator such as an audible alarm (Step S360). The pop-up message 25 or other indicator may be used to inform subsequent users of the wireless first device 20 that its call and/or message forwarding feature is activated, alerting the subsequent user that he or she may be interested in deactivating the feature.

Other additional functions may include automatically terminating the information forwarding feature at a preset time, or automatically changing the address of the receiving device 21 to a new address of a new receiving device 21 at another preset time. The preset times and the additional addresses may be programmed by the user of the sending device 22 and also incorporated into the body of the special text message 23.

Fig. 4 is a schematic diagram of an exemplary format of a special text message 23 according to one embodiment of the present invention. The format begins with an initialisation flag 27 that is used to identify the beginning of the special text message 23. The initialisation flag 27 may be a specific byte that is preprogrammed into the wireless first device 20 to indicate that specific call and message forwarding information in a particular order will immediately follow the initialisation flag 27. For example, a command ID 28 may consist of a certain number of bytes that indicate whether call forwarding of the wireless first device 20 should be turned on or off, whether message forwarding of the wireless first device 20 should be turned on or off. Additional bytes of the command ID 28 may be reserved for other operations such as whether a screen pop-up message 25 should be displayed. Subsequent bytes in the special text message 23 may include a Personal Identification Number (PIN) 29 that is used to provide added security to the system so that only authorized users may turn an information forwarding feature on or off. Following the PIN 29, additional bytes in the special text message 23 may include operational data 30 such as the specific mobile address to where all calls and messages should be forwarded. Information concerning additional functions such as automatic termination of the forwarding feature or the addresses of additional receiving devices 21 may also be included in the operational data 30. Finally, the special text message 23 may end in a termination flag 31 that indicates that any subsequent data received by the wireless first device 20 is not a component of the special text message 23.

It should be understood that the exemplary format of a special text message 23 as described above is simply an example of one possible format for special text messages 23 according to the present invention and that other formats may also be used.

When the special text message 23 is transmitted as an SMS, EMS or MMS message, the special text message 23 may form part of a transport protocol data unit (TPDU). The special text message 23 will then generally follow the user data header (TP-UDH) and form part of the user data (TP-UD) of the TPDU.

The method and apparatus of the present invention therefore concern a novel technique for programming a wireless first device 20 using a sending device 22, where the sending device 22 is usually in a location remote from the location of the wireless first device 20, so that the wireless first device 20 will forward information such as telephone calls and messages to one or more receiving devices 21. Although prior art methods exist for programming wireless devices to forward calls and messages, these prior art methods require physical access to the forwarding device from which the calls and messages will be forwarded. The method and apparatus of the present invention do not require physical access to the forwarding device. Therefore, for example, if a user of a mobile phone forgets to take his or her mobile phone to the office and leaves the phone at home, according to the present invention the user can, by sending a simple text message to the mobile phone, reprogram the mobile phone so that it forwards all calls and messages to the office.

Although exemplary embodiments of the present invention have been illustrated in the accompanying drawings and described in the foregoing description, it is to be understood that the invention is not limited to the embodiments disclosed; rather the invention can be varied in numerous ways. It should, therefore, be recognized that the invention should be limited only by the scope of the following claims.

## Claims

1. A method of programming a wireless first device (1, 20) to forward information, comprising:
incorporating an alphanumeric code in said wireless first device (1, 20);
creating a text message (23) using a sending device (22);
incorporating said alphanumeric code and an address of a receiving device (21) in said text message (23); and
transmitting said text message (23) from said sending device (22) to said wireless first device (1, 20), wherein said wireless first device recognizes said alphanumeric code and consequently reprograms itself to forward information to said address of said receiving device (21).

2. The method of claim 1, wherein said text message (23) is a type of message selected from the group consisting of SMS messages, EMS messages, and MMS messages.

3. The method of claim 1, wherein said text message (23) is part of a transport protocol data unit, TPDU.

4. The method of claim 1, wherein said wireless first device (1, 20), said sending device (22) and said receiving device (21) are each devices selected from the group consisting of mobile phones, personal digital assistants, PDAs, and personal computers.

5. The method of claim 1, further comprising the step of displaying a pop-up message (25) on said wireless first device (1, 20) indicating that said wireless first device is programmed to forward information to said receiving device (21).

6. The method of claim 1, wherein said sending device (22) and said receiving device (21) are one and the same device.

7. The method of claim 1, wherein said information includes telephone calls, SMS messages, EMS messages, or MMS messages.

8. A wireless device (1, 20) comprising:
a processor (3);
a radio frequency communications unit (2) coupled to be in communication with said processor (3); and
a computer readable medium (4, 14, 16, 18) coupled to be in communication with said processor (3), wherein said processor (3) is operative to:
receive from a sending device (22) and through said communications unit (2) a text message that includes an alphanumeric code and the address of a receiving device (21);
compare said received alphanumeric code with a recorded code saved on said computer readable medium; and
if said received code and said recorded code match, forward information through said communications unit (2) to said address of said receiving device (21).

9. The wireless device of claim 8, wherein said text message is a type of message selected from the group consisting of SMS messages, EMS messages, and MMS messages.

10. The wireless device of claim 8, wherein said text message is part of a transport protocol data unit, TPDU.

11. The wireless device of claim 8, wherein said wireless device (1, 20) is a device selected from the group consisting of mobile phones, personal digital assistants, PDAs, and personal computers.

12. The wireless device of claim 8, wherein said processor (3) is further operative to display a pop-up message (25) on said wireless device (1, 20) indicating that said wireless device is programmed to forward information to said receiving device (21).

13. The wireless device of claim 8, wherein said information includes telephone calls, SMS messages, EMS messages, or MMS messages.

## Patentansprüche

1. Verfahren zur Programmierung einer drahtlosen ersten Vorrichtung (1, 20) für die Weiterleitung von Informationen, wobei das Verfahren die folgenden Schritte umfasst:
Einbau eines alphanumerischen Codes in die drahtlose erste Vorrichtung (1, 20);
Erzeugung einer Textnachricht (23) unter Verwendung einer Sendevorrichtung (22);
Einbau des alphanumerischen Codes und einer Adresse einer Empfangsvorrichtung (21) in die Textnachricht (23); und
Übermittlung der Textnachricht (23) von der Sendevorrichtung (22) an die drahtlose erste Vorrichtung (1, 20), wobei die drahtlose erste Vorrichtung den alphanumerischen Code erkennt und sich folgedessen neu programmiert, um Informationen an die Adresse der Empfangsvorrichtung (21) weiterzuleiten.

2. Verfahren nach Anspruch 1, wobei die Textnachricht (23) eine Art von Nachricht ist, welche aus der Gruppe bestehend aus SMS-Nachrichten, EMS-Nachrichten und MMS-Nachrichten ausgewählt wird.

3. Verfahren nach Anspruch 1, wobei die Textnachricht (23) Teil einer Transportprotokolldateneinheit, TPDU, ist.

4. Verfahren nach Anspruch 1, wobei die drahtlose erste Vorrichtung (1, 20), die Sendevorrichtung (22) und die Empfangsvorrichtung (21) jeweils Vorrichtungen sind, welche aus der Gruppe bestehend aus Mobiltelefonen, persönlichen digitalen Assistenten, PDAs, und Personalcomputern ausgewählt werden.

5. Verfahren nach Anspruch 1, welches des Weiteren den Schritt der Anzeige einer Pop-Up-Meldung (25) auf der drahtlosen ersten Vorrichtung (1, 20) anzeigt, welche anzeigt, dass die drahtlose erste Vorrichtung zur Weiterleitung von Informationen an die Empfangsvorrichtung (21) programmiert ist.

6. Verfahren nach Anspruch 1, wobei die Sendevorrichtung (22) und die Empfangsvorrichtung (21) eine und dieselbe Vorrichtung sind.

7. Verfahren nach Anspruch 1, wobei die Informationen Telefongespräche, SMS-Nachrichten, EMS-Nachrichten oder MMS-Nachrichten einschließen.

8. Drahtlose Vorrichtung (1, 20), welche Folgendes aufweist:
einen Prozessor (3);
eine Funkfrequenz-Kommunikationseinheit (2), welche derart gekoppelt ist, dass sie mit dem Prozessor (3) in Verbindung steht; und
ein computerlesbares Medium (4, 14, 16, 18), welches derart gekoppelt ist, dass es mit dem Prozessor (3) in Verbindung steht, wobei der Prozessor (3) funktionsbereit ist zum:
Empfang von einer Sendevorrichtung (22) und durch die Kommunikationseinheit (2) einer Textnachricht, welche einen alphanumerischen Code und die Adresse einer Empfangsvorrichtung (21) einschließt;
Vergleich des empfangenen alphanumerischen Codes mit einem verzeichneten Code, der auf dem computerlesbaren Medium gespeichert ist; und
falls der empfangende Code mit dem verzeichneten Code übereinstimmt, Weiterleitung von Informationen durch die Kommunikationseinheit (2) an die Adresse der Empfangsvorrichtung (21).

9. Drahtlose Vorrichtung nach Anspruch 8, wobei die Textnachricht eine Art von Nachricht ist, welche aus der Gruppe bestehend aus SMS-Nachrichten, EMS-Nachrichten und MMS-Nachrichten ausgewählt wird.

10. Drahtlose Vorrichtung nach Anspruch 8, wobei die Textnachricht Teil einer Transportprotokolldateneinheit, TPDU, ist.

11. Drahtlose Vorrichtung nach Anspruch 8, wobei die drahtlose Vorrichtung (1, 20) eine Vorrichtung ist, welche aus der Gruppe bestehend aus Mobiltelefonen, persönlichen digitalen Assistenten, PDAs, und Personalcomputern ausgewählt wird.

12. Drahtlose Vorrichtung nach Anspruch 8, wobei der Prozessor (3) des Weiteren funktionsbereit ist, um eine Pop-up-Meldung (25) auf der drahtlosen Vorrichtung (1, 20) anzuzeigen, welche anzeigt, dass die drahtlose Vorrichtung zur Weiterleitung von Informationen an die Empfangsvorrichtung (21) programmiert ist.

13. Drahtlose Vorrichtung nach Anspruch 8, wobei die Informationen Telefongespräche, SMS-Nachrichten, EMS-Nachrichten oder MMS-Nachrichten einschließen.

## Revendications

1. Procédé de programmation d'un premier dispositif sans fil (1, 20) pour transmettre des informations, comprenant :
incorporer un code alphanumérique dans ledit premier dispositif sans fil (1, 20) ;
créer un message texte (23) en utilisant un dispositif émetteur (22) ;++
incorporer ledit code alphanumérique et une adresse d'un dispositif récepteur (21) dans ledit message texte (23) ; et
transmettre ledit message texte (23) dudit dispositif émetteur (22) audit premier dispositif sans fil (1, 20), où ledit premier dispositif sans fil reconnaît ledit code alphanumérique et se reprogramme par conséquent lui-même pour transmettre les informations à ladite adresse dudit dispositif récepteur (21).

2. Procédé selon la revendication 1, dans lequel ledit message texte (23) est un type de message sélectionné dans le groupe consistant en messages SMS, messages EMS et messages MMS.

3. Procédé selon la revendication 1, dans lequel ledit message texte (23) est une partie d'une unité de données de protocole de transport, TPDU.

4. Procédé selon la revendication 1, dans lequel ledit premier dispositif sans fil (1, 20), ledit dispositif émetteur (22) et ledit dispositif récepteur (21) sont chacun des dispositifs sélectionnés dans le groupe consistant en téléphones mobiles, assistants numériques personnels, PDAs et ordinateurs personnels.

5. Procédé selon la revendication 1, comprenant en outre l'étape consistant à afficher un message pop-up (25) sur ledit premier dispositif sans fil (1, 20) indiquant que ledit premier dispositif sans fil est programmé pour transmettre les informations audit dispositif récepteur (21).

6. Procédé selon la revendication 1, dans lequel ledit dispositif émetteur (22) et ledit dispositif récepteur (21) sont un même dispositif.

7. Procédé selon la revendication 1, dans lequel lesdites informations comprennent des appels téléphoniques, des messages SMS, des messages EMS ou des messages MMS.

8. Dispositif sans fil (1, 20) comprenant :
un processeur (3) ;
une unité de communications radiofréquence (2) couplée pour être en communication avec ledit processeur (3) ; et
un support lisible par ordinateur (4, 14, 16, 18) couplé pour être en communication avec ledit processeur (3), où ledit processeur (3) est apte à :
recevoir d'un dispositif émetteur (22) et par ladite unité de communications (2) un message texte qui inclut un code alphanumérique et l'adresse d'un dispositif récepteur (21) ;
comparer ledit code alphanumérique reçu avec un code enregistré mémorisé sur ledit support lisible par ordinateur ; et
si ledit code reçu et ledit code enregistré correspondent, transmettre les informations par ladite unité de communications (2) à ladite adresse dudit dispositif récepteur (21).

9. Dispositif sans fil selon la revendication 8, dans lequel ledit message texte est un type de message sélectionné dans le groupe consistant en messages SMS, messages EMS et messages MMS.

10. Dispositif sans fil selon la revendication 8, dans lequel ledit message texte fait partie d'une unité de données de protocole de transport, TPDU.

11. Dispositif sans fil selon la revendication 8, dans lequel ledit dispositif sans fil (1, 20) est un dispositif sélectionné dans le groupe consistant en téléphones mobiles, assistants numériques personnels PDAs et ordinateurs personnels.

12. Dispositif sans fil selon la revendication 8, dans lequel ledit processeur (3) est en outre apte à afficher un message pop-up (25) sur ledit dispositif sans fil (1, 20) indiquant que ledit dispositif sans fil est programmé pour transmettre les informations audit dispositif récepteur (21).

13. Dispositif sans fil selon la revendication 8, dans lequel lesdites informations incluent des appels téléphoniques, des messages SMS, des messages EMS ou des messages MMS.
